# EUROPÄISCHE PATENTANMELDUNG

(11) **EP 1 152 188 A2**
(43) Veröffentlichungstag der Anmeldung: **07.11.2001**
(21) Anmeldenummer: 01000071.9
(22) Anmeldetag: 27.03.2001
(51) Int. Cl.: F21V 14/04, F21V 14/08, F21V 8/00, F21V 7/09

(54) **Beleuchtungseinrichtung und Verfahren zum Betreiben einer Beleuchtungseinrichtung**

(30) Priorität: 05.04.2000 DE 10016882
(71) Anmelder: Philips Corporate Intellectual Property GmbH, 52064 Aachen (DE); Koninklijke Philips Electronics N.V., 5621 BA Eindhoven (NL)
(72) Erfinder: Luce, Thomas, Dr., Habsburgerallee 11, 52064 Aachen (DE)
(74) Vertreter: Volmer, Georg, Dipl.-Ing.

(57) **Zusammenfassung**

Eine Beleuchtunggeinrichtung (10) mit einer Lichtquelle (12) und einem ersten Reflektor (18), der beim bestimmungsgsmäßen Betrieb von der Lichtquelle (12) abgsgebenes Licht zu wenigstens zwei Brennpunkten (22,24) lenkt, soll derart ausgestaltet werden, dass der Lichtweg zu einem der Brennpunkte (22,24) durchtrennt werden kann, ohne dass thermische Probleme auftreten. Es ist ein zweiter Reflektor (34) vorgesehen, der das vom ersten Reflektor (18) zu einem ersten der beiden Brennpunkte (24) gelenkte licht zu dem zweiten der beiden Brennpunkte (22,24) partiell optional oder indirekt umlenkt.

## Beschreibung

Die Erfindung betrifft eine Beleuchtungseinrichtung mit einer Lichtquelle und einem ersten Reflektor, der beim bestimmungsgemäßen Betrieb von der Lichtquelle abgegebenes Licht zu wenigstens zwei Brennpunkten lenkt, sowie ein Verfahren zum Betreiben einer solchen Beleuchtungseinrichtung.

Solche Beleuchtungseinrichtungen und Verfahren sind bekannt, z.B. aus der EP 0 501 669 B1. Sie dienen in der Regel dazu, das aus einer Lichtquelle stammende Licht in zwei oder mehr Bündel aufzuspalten, insbesondere zwecks Einspeisung in optische Fasern. Damit können zum Beispiel zwei Kfz-Scheinwerfer betrieben werden, die dann Licht exakt gleicher Farbe und nahezu gleicher Intensität abgeben.

Nun besteht bei solchen Beleuchtungseinrichtungen oftmals die Notwendigkeit, eines der Lichtbündel "auszuschalten". Bislang wird dies mit Abdeckblenden gelöst, die z.B. die Austrittsöffnung einer optischen Faser verschließen.

Die Verwendung von Abdeckblenden bedingt jedoch, dass die Blende bzw. die jeweilige Beleuchtungseinrichtung das ausgeblendete Licht absorbieren müssen, was aufgrund Tatsache, dass bei Beleuchtungseinrichtungen der hier in Frage stehenden Art oft hoch-intensive Lichtquellen verwendet werden, häufig zu thermischen Problemen führt.

Davon ausgehend liegt der Erfindung die Aufgabe zugrunde, eine Beleuchtungseinrichtung und ein Verfahren zum Betreiben einer Beleuchtungseinrichtung der eingangs genannten Art anzugeben, welche es erlauben, ein Lichtbündel bei Bedarf "auszuschalten", ohne dass das nicht benötigte Licht zu thermischen Problemen führt.

Die Aufgabe wird gelöst von einer Vorrichtung mit den Merkmalen des Anspruchs 1 bzw. von einem Verfahren mit den Merkmalen des Anspruchs 9. Vorteilhafte Ausführungs- bzw. Durchführungsformen sind Gegenstand der Unteransprüche. Dementsprechend schlägt die Erfindung eine gattungsgemäße Beleuchtungseinrichtung vor, welche wenigstens einen zweiten Reflektor umfasst. Dieser Reflektor ist derart ausgestaltet, dass er zumindest partiell das vom ersten Reflektor zu einem ersten der beiden Brennpunkten gelenkte Licht zu dem zweiten der beiden Brennpunkte optional umlenken kann. Hierbei kann das Umlenken direkt oder indirekt erfolgen.

Dementsprechend schlägt die Erfindung ein gattungsgemäßes Verfahren vor, bei welchem bei Bedarf das zu dem ersten der beiden Brennpunkte gelenkte Licht direkt oder indirekt zu dem zweiten der beiden Brennpunkte zumindest partiell umgelenkt wird

Eine derartige Anordnung baut besonders einfach bzw. ein derartiges Verfahren ist besonders einfach durchzuführen, wenn der zweite Reflektor ein in den Strahlengang des Lichts von der Lichtquelle zu dem ersten Brennpunkt fahr- oder schwenkbarer oder in diesen Strahlengang verdrehbarer Spiegel ist. Alternativ kann der zweite Reflektor ein vorzugsweise im Strahlengang des Lichts von der Lichtquelle zu dem ersten Brennpunkt angeordneter elektronischer - oder sonst wie in seinen Spiegeleigenschaften veränderbarer-Spiegel sein, der zwischen Reflektions- und Transmissionsbetrieb umgeschaltet werden kann. Zum Ein- und Ausschalten braucht dann nur der Spiegel entsprechend betätigt, also verfahren, verschwenkt, verdreht oder umgeschaltet, zu werden.

An den beiden Brennpunkten können Mittel zum Weiterleiten der Strahlung vorgesehen sein. Vorzugsweise sind in oder in der Nähe der beiden Brennpunkte Lichteintrittsöffnungen optischer Lichtleiter bzw. optischer Fasern vorgesehen. Auf diese Weise lässt sich besonders einfach das durch den erfindungsgemäßen Strahlteiler der Beleuchtungseinrichtung geteilte Lichtbündel an gewünschte Stellen weiterleiten. Es versteht sich, dass auch andere Strahlenwege, wie beispielsweise Spiegelanordnungen oder Optiken, vorgesehen sein können, bis das Licht in einen Lichtleiter bzw. eine optische Faser eingespeist wird.

Vorzugsweise ist der zweite Reflektor derart ausgebildet, dass er beim optionalen Umlenken das Eintreten von Licht in eine der Lichteintrittsöffnungen, insbesondere in die am ersten Brennpunkt angeordnete Lichteintrittsöffnung, zumindest weitestgehend verhindert. Auf diese Weise kann besonders einfach ein Weiterleiten von Licht aus dem ersten Brennpunkt verhindert werden.

Die Gesamtanordnung baut besonders einfach, wenn der erste Reflektor aus zwei Halbellipsoiden mit jeweils zwei Brennpunkten besteht, wobei die Halbellipsoiden derart angeordnet sind, dass sie einen gemeinsamen Brennpunkt aufweisen, in dem Lichtquelle angeordnet ist.

Wird der zweite Reflektor beim optionalen Umlenken in der geometrischen Mitte eines der beiden Halbellipsoiden angeordnet, so wird nahezu sämtliches Licht zurück in den gemeinsamen Brennpunkt und damit zur Gänze zu dem zweiten Brennpunkt, welcher dem zweiten Halbellipsoid zugeordnet ist, zurückgeleitet. Ebenso ist es möglich, den zweiten Reflektor beim optionalen Umlenken in oder nahe an den ersten Brennpunkt anzuordnen. Hierbei kann der Reflektor jedoch nicht, wie bei der zuvor genannten Alternative, lediglich gradlinig eingeführt werden, sondern muss genau justiert sein. Insbesondere kann natürlich auch eine nicht ebene Reflektorform für den zweiten Reflektor verwendet werden. In der Praxis hat sich überraschenderweise herausgestellt, dass die letztgenannte Alternative effektiver in der Lichtausbeute als die erstgenannte, theoretisch überlegene Alternative ist.

Es versteht sich, dass bei geeigneter Ausgestaltung des ersten Reflektors auch mehr als zwei Brennpunkte von der einen Lichtquelle mit Licht versorgt werden können. Insbesondere ist es auch möglich, mehrere Reflektoren, welche dem zweiten Reflektor entsprechen und jeweils den verschiedenen Brennpunkten zugeordnet sind, vorzusehen.

Die Erfindung hat den großen Vorteil, dass das an einer Stelle nicht benötigte Licht nicht ungenutzt in Wärme umgewandelt, sondern vielmehr zumindest teilweise direkt oder indirekt, d.h. insbesondere über Reflektion auf den ersten Reflektor, zu einem oder ggf. mehreren anderen Brennpunkten gelenkt wird, wo es zum Beispiel in optische Fasern eintreten und zur Erhöhung der Lichtintensität genutzt werden kann.

Weitere Einzelheiten und Vorteile der Erfindung ergeben sich aus der nachfolgenden rein beispielhaften und nicht beschränkenden Beschreibung eines Ausführungsbeispiels in Verbindung mit der Zeichnung Es zeigen:
- Fig 1: eine schematische Darstellung einer erfindungsgemäßen Beleuchtungseinrichtung mit einem ersten und einem zweiten Reflektor, wobei der zweite Reflektor in den Strahlengang des Lichts von der Lichtquelle zu einem Brennpunkt des ersten Reflektors gefahren ist, und
- Fig. 2: die Beleuchtungseinrichtung gemäß Fig. 1 mit aus dem Strahlengang gefahrenen zweiten Reflektor.

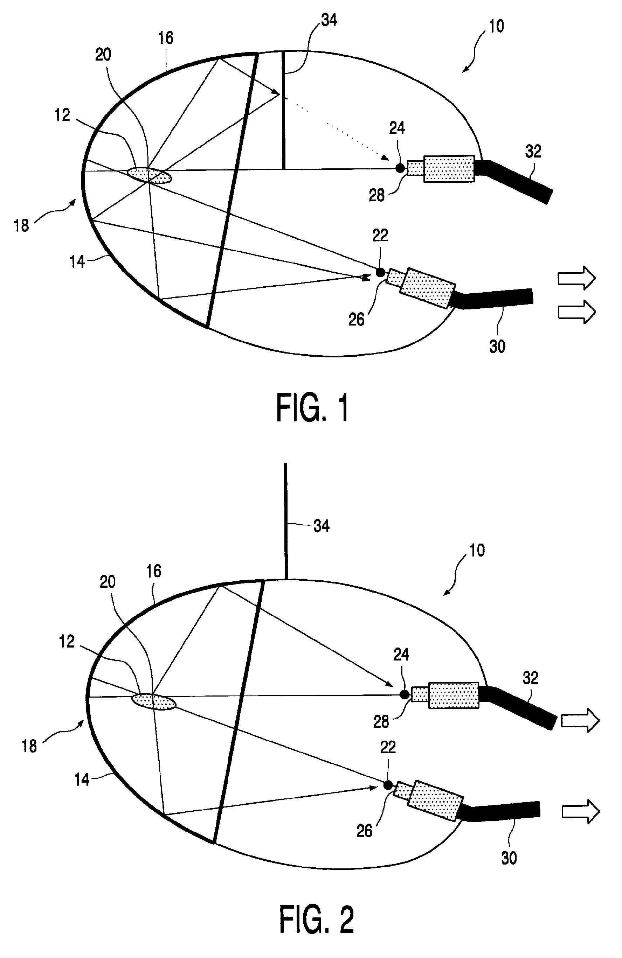

In den Figuren 1 und 2 ist eine in ihrer Gesamtheit mit 10 bezeichnete Beleuchtungseinrichtung gezeigt, die eine Lichtquelle 12 und einen aus zwei Halbellipsoiden 14 und 16 bestehenden ersten Reflektor 18 umfasst. Der erste Reflektor weist bei diesem Ausrührungsbeispiel insgesamt drei Brennpunkte 20, 22 und 24 auf, wobei die Lichtquelle 12 im gemeinsamen Brennpunkt 20 der beiden Halbellipsoide 14 und 16 angeordnet ist. In den beiden anderen Brennpunkten 22 und 24 befinden sich die Lichteintrittsöffnungen 26 und 28 zweier optischer Fasern 30 und 32, wobei die Lichteintrittsöffnungen 26 und 28 in der Zeichnung aus Gründen der Übersichtlichkeit in Richtung des Strahlengangs des Lichts von der Lichtquelle zu den Lichtseintrittsöffnungen gesehen kurz hinter den Brennpunkten 22 und 24 eingezeichnet wurden.

Die optischen Fasern 30 und 32 können je nach Einsatzzweck der erfindungsgemäßen Beleuchtungsvorrichtung an unterschiedlichsten Orten münden, beispielsweise in einem Scheinwerfer eines Land-, Wasser- oder Luftfahrzeugs.

Um den Lichteinfall beim Betrieb der Lichtquelle 12 in eine der beiden optischen Fasern steuern zu können, ist ein zweiter Reflektor 34 vorgesehen, der bei diesem Ausführungsbeispiel etwa in der geometrischen Mitte des Halbellipsoids 16 in den Strahlengang des von der Lichtquelle 12 erzeugten Lichts zur Eintrittsöffnung 28 der optischen Faser 32 gefahren werden kann, wo er dann das eintreffende Licht derart reflektiert, dass es über den ersten Reflektor 18 zur anderen Eintrittsöffnung 26 gelangt. Als zweiter Reflektor kann zB. ein normaler, planer Spiegel dienen. Die Fig. 1 zeigt den zweiten Reflektor 34 in der in den Strahlengang gefahrenen Position, während die Fig 2 den zweiten Reflektor in einer aus dem Strahlengang gezogenen Position zeigt.

Im Rahmen des Erfindungsgedankens sind zahlreiche Abwandlungen und Weiterbildungen möglich, die sich zum Beispiel auf die Ausgestaltung und Anordnung des zweiten Reflektors oder die Ausbildung des ersten Reflektors und die Anzahl der Brennpunkte beziehen. Erfindungswesentlich ist jedenfalls, dass das an einem Brennpunkt nicht benötigte Licht zumindest partiell zu einem anderen Brennpunkte umgelenkt wird, wo es vorteilhaft genutzt werden kann.

## Patentansprüche

1. Beleuchtungseinrichtung (10) mit einer Lichtquelle (12) und einem ersten Reflektor (18), der beim bestimmungsgemäßen Betrieb von der Lichtquelle (12) abgegebenes Licht zu wenigstens zwei Brennpunkten (22,24) lenkt,
**dadurch gekennzeichnet,**
**dass** wenigstens ein zweiter Reflektor (34) zum zumindest partiellen optionalen direkten oder indirekten Umlenken des vom ersten Reflektor (18) zu einem ersten der beiden Brennpunkte (24) gelenkten Lichts zu dem zweiten der beiden Brennpunkte (22, 24) vorgesehen ist.

2. Beleuchtungseinrichtung (10) nach Anspruch 1,
**dadurch gekennzeichnet,**
**dass** in oder an den beiden Brennpunkten (22, 24), zu denen der erste Reflektor (18) beim bestimmungsgemäßen Betrieb von der Lichtquelle (12) abgegebenes Licht lenkt, Lichteintrittsöffnungen (26,28) optischer Fasern (20,32) vorgesehen sind.

3. Beleuchtungseinrichtung (10) nach Anspruch 2,
**dadurch gekennzeichnet,**
**dass** der zweite Reflektor (34) derart ausgebildet ist, dass er beim optionalen Umlenken das Eintreten von Licht in eine der Lichteintrittsöffnungen (28) zumindest weitestgehend verhindert.

4. Beleuchtungseinrichtung (10) nach einem der Ansprüche 1 bis 3, wobei der erste Reflektor (18) aus zwei Halbellipsoiden (14,16) mit jeweils zwei Brennpunkten (20, 22; 20, 26) besteht,
**dadurch gekennzeichnet,**
**dass** die Halbellipsoiden derart angeordnet sind, dass sie einen gemeinsamen Brennpunkt (20) besitzen, in dem die Lichtquelle (12) angeordnet ist.

5. Beleuchtungseinrichtung (10) nach Anspruch 4,
**dadurch gekennzeichnet,**
**dass** der wenigstens eine zweite Reflektor (34) beim optionalen Umlenken in der geometrischen Mitte eines der beiden Halbellipsoide (14,16) angeordnet ist.

6. Beleuchtungseinrichtung nach einem der Ansprüche 1 bis 4,
**dadurch gekennzeichnet,**
**dass** der wenigstens eine zweite Reflektor beim optionalen Umlenken in oder nahe an demjenigen Brennpunkt des ersten Reflektors angeordnet ist, zu dem kein Licht gelangen soll.

7. Beleuchtungseinrichtung (10) nach einem der Ansprüche 1 bis 6,
**dadurch gekennzeichnet,**
**dass** der wenigstens eine zweite Reflektor ein in den Strahlengang des Lichts von der Lichtquelle (12) zu dem ersten Brennpunkt (24) fahr- oder schwenkbarer oder in diesem Strahlengang verdrehbarer Spiegel (34) ist.

8. Beleuchtungseinrichtung nach einem der Ansprüche 1 bis 6,
**dadurch gekennzeichnet,**
**dass** der wenigstens eine zweite Reflektor ein vorzugsweise im Strahlengang des Lichts von der Lichtquelle zu dem ersten Brennpunkt angeordneter elektronischen Spiegel ist, der zwischen Reflektions- und Transmissionsbetrieb umgeschaltet werden kann.

9. Verfahren zum Betreiben einer Beleuchtungseinrichtung mit einer Lichtquelle und einem ersten Reflektor, der beim bestimmungsgemäßen Betrieb von der Lichtquelle abgegebenes Licht zu wenigstens zwei Brennpunkten lenkt,
**dadurch gekennzeichnet,**
**dass** bei Bedarf das zu einem ersten der beiden Brennpunkte gelenkte Licht direkt oder indirekt zu dem zweiten der beiden Brennpunkte zumindest partiell umgelenkt wird

10. Verfahren nach Anspruch 9,
dadurch gekennzsichnet,
dass zum Umlenken des zu dem ersten Brennpunkt gelenkten Lichts zu dem zweiten Brennpunkt ein zweiter Reflektor in den Strahlengang des Lichts von der Lichtquelle zu dem ersten Brennpunkt des ersten Reflektors gefahren oder geschwenkt oder in diesem Strahlengang verdreht wird

11. Verfahren nach Anspruch 9,
**dadurch gekennzeichnet,**
**dass** zum Umlenken des zu dem eisten Brennpunkt gelenkten Lichts zu dem zweiten Brennpunkt ein im Strahlengang des Lichts von der Lichtquelle zu dem ersten Brennpunkt des ersten Reflektors angeordneter elektronischer Spiegel von Transmissionsbetrieb auf Reflektionsbetrieb umgeschaltet wird.
